# EUROPEAN PATENT APPLICATION

(11) **EP 4 759 514 A1**
(43) Date of publication of application: **17.06.2026**
(21) Application number: 24315567.8
(22) Date of filing: 10.12.2024
(51) Int. Cl.: B29C 64/124, B29C 64/277, B29D 11/00, B33Y 10/00, B33Y 30/00

(54) **A MANUFACTURING DEVICE FOR ADDITIVELY MANUFACTURING AN OBJECT ENCAPSULATING A COMPONENT**

(71) Applicant: ESSILOR INTERNATIONAL, 94220 Charenton-Le-Pont (FR)
(72) Inventor: Geisler, Emma, 94700 Maisons-Alfort (FR); Leite, Pierre, 91310 Monthlery (FR)
(74) Representative: Korakis-Ménager, Sophie

(57) **Abstract**

A manufacturing device for additively manufacturing an object, the object encapsulating a component, the manufacturing device being configured for placing the component in a volume of an optically reactive material, irradiating, for forming a part of the object, a part of the optically reactive material, the part of the optically reactive material being adjacent to the component, the irradiating being realized with a first light of a first wavelength and a second light of a second wavelength, wherein the irradiation of the part of the optically reactive material depends on a value of at least one characteristic of the component.

## Description

### Technical field

This disclosure relates to manufacturing devices and manufacturing methods for manufacturing an object. The object encapsulates a component.

### Background information and prior art

**The** US patent applications US20220305723 and US20220410473 and the PCT application WO2023/220463 present manufacturing devices and manufacturing methods. These manufacturing devices and methods may create an object using additive manufacturing. To do so an optically reactive material is irradiated by two lights having two different wavelengths. The optically reactive material is a liquid material and once irradiated by both lights becomes solid.

In some situations, one may need to encapsulate a component in the object. However, the encapsulated component may disturb the manufacturing of the object.

Therefore, there is a need for manufacturing devices and manufacturing methods for manufacturing an object that encapsulates a component.

### Summary

The following presents a simplified summary to provide a basic understanding of various aspects of this disclosure. This summary is not an extensive overview of all contemplated aspects and is intended to neither identify key or critical elements of all aspects nor delineate the scope of any or all aspects. The sole purpose is to present some concepts of one or more aspects in a simplified form as a prelude to the more detailed description that is presented later.

One aspect of this disclosure is a manufacturing device for additively manufacturing an object, the object encapsulating a component, the manufacturing device being configured for placing the component in a volume of an optically reactive material, irradiating, for forming a part of the object, a part of the optically reactive material, the part of the optically reactive material being adjacent to the component, the irradiating being realized with a first light of a first wavelength and a second light of a second wavelength, wherein the irradiation of the part of the optically reactive material depends on a value of at least one characteristic of the component.Another aspect of this disclosure is a manufacturing method of an object encapsulated a component, the manufacturing method comprising placing the component in a volume of the optically reactive material, irradiating, for forming a part of the object, a part of the optically reactive material, the part of the optically reactive material being adjacent to the component, the irradiating being realized with a first light of a first wavelength and a second light of a second wavelength, the irradiation of the part of the optically reactive material depends on a value of at least one characteristic of the component.

Another aspect of this disclosure is a computer program comprising instructions which, when the computer program is executed by a computer, cause the computer to carry out a method for manufacturing an object encapsulated a component, the manufacturing method comprising placing the component in a volume of the optically reactive material, irradiating, for forming a part of the object, a part of the optically reactive material, the part of the optically reactive material being adjacent to the component, the irradiating being realized with a first light of a first wavelength and a second light of a second wavelength, the irradiation of the part of the optically reactive material depends on a value of at least one characteristic of the component.

A computer may include a memory and a processor. Examples of processors include microprocessors, microcontrollers, graphics processing units (GPUs), central processing units (CPUs), application processors, digital signal processors (DSPs), reduced instruction set computing (RISC) Processors, systems on a chip (SoC), field-programmable gate arrays (FPGAs), programmable logic devices (PLDs), state machines, gated logic, discrete hardware circuits, and other suitable hardware configured to perform the various functionality described throughout this disclosure. The memory may be a computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor of the computer.

Another aspect of this disclosure is a non-transitory program storage device, readable by a computer, tangibly embodying a program of instructions executable by the computer to perform a method for manufacturing an object encapsulated a component, the manufacturing method comprising placing the component in a volume of the optically reactive material, irradiating, for forming a part of the object, a part of the optically reactive material, the part of the optically reactive material being adjacent to the component, the irradiating being realized with a first light of a first wavelength and a second light of a second wavelength, the irradiation of the part of the optically reactive material depends on a value of at least one characteristic of the component.

### Description of the drawings

For a more complete understanding of the description provided herein and the advantages thereof, reference is how made to the brief descriptions below, taken in connection with the accompanying drawings and detailed description, wherein like reference numerals represent like parts.
Figure 1 represents a manufacturing device for manufacturing an object encapsulating a component.
Figure 2 represents a method for manufacturing the object encapsulating the component.
Figures 3-a to 3-c represent different situations in which each point of a side of the component faces or not the lighting device.
Figure 4 represents an embodiment of the manufacturing method.
Figure 5 represents another embodiment of the manufacturing method.
Figure 6 represents another embodiment of the manufacturing method.
Figure 7 represents another a deformation of the light caused by the component.
Figure 8 represents a way to mitigate the deformation of the light caused by the component.

### Detailed description of embodiments

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form to avoid obscuring such concepts.

### Description of the manufacturing device for manufacturing an object encapsulating a component

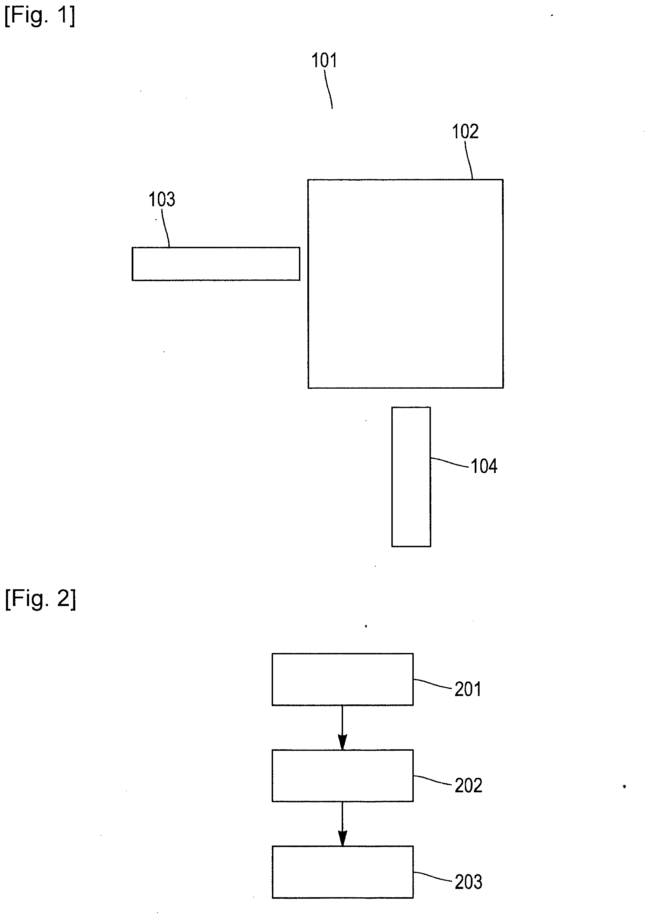

Figure 1 represents a manufacturing device 101. The manufacturing device 101 comprises a receptacle 102 configured to contain an optically reactive material. The manufacturing device 101 comprises a first lighting device 103. The first lighting device 103 is configured to irradiate a first light. The first light has a first wavelength. The manufacturing device 101 comprises a second lighting device 104. The second lighting device 104 is configured to irradiate a second light. The second light has a second wavelength.

The first lighting device 103 and the second lighting device 104 are configured to irradiate respectively the first light and the second light in an overlapping manner. This overlapping is on a part of the optically reactive material and is dedicated to the curing of the part of the optically reactive material.

By curing, one refers to the transformation of the optically reactive material from a liquid state to a solid state.

**The** US patent applications US20220305723 and US20220410473 and the PCT application.WO2023/220463 describe different optically reactive materials that may be cured only in parts where they are irradiated by two lights, simultaneously or in immediate succession. By immediate succession, one means that a time difference between the irradiation by the first light and the irradiation by the second light is less than a relaxation time of the optically reactive materials. Relaxation time refers to the duration required for the optically reactive material to return to a state where it is no longer cured by the irradiation by either the first light or the second light, after being irradiated to the other of the two among the first light and the second light. This relaxation time may be about 1 ms. The skilled person may also know other types of optically reactive materials having similar properties as the ones of the US patent applications US20220305723 and US20220410473 and the PCT application WO2023/220463.

The first lighting device 103 may be a projector adapted to project an image or a light sheet.

The second lighting device 104 may be a projector adapted to project an image or a light sheet.

By light sheet one means a light forming a plane.

The projector may be a Spatial Light Modulator (for example a Digital Light Processing DLP, a projector using a Liquid Crystal Display LCD or Liquid Crystal on Silicon LCOS).

The projector adapted to project the light sheet may also be a system comprising a laser and a cylindrical lens or a galvanometer configured to create a light sheet from a punctual light. The light sheet may have a thickness between 10µm and 50µm. The galvanometer may comprise a high-speed electromagnetic motor with a rotating mirror configured to deflect a laser beam along a predefined axis to create a light sheet.

The light sheet may reach the whole of the "height" of the receptacle 102 or be limited in height in function of the difference between the maximum Z position and the minimum Z position of the object to be manufactured or may be variable, adapted to the height of the image or the light sheet sent by the projector at any given time.

The first lighting device 103 may irradiate the light along a first axis or a first plane. The second lighting device 102 may irradiate the light along a second axis or a second plane. The first axis or the first plane may be sensibly perpendicular to the second axis or the second plane.

In some embodiments the first lighting device 103 and/or the second lighting device 104 may comprise a light generator and an optical system. The optical system may be configured to transport the light generated by the light generator and to irradiate the light from one end of the optical system. The optical system may comprise an optical fiber, to realize this transportation. The optical system may also comprise, for moving the first light or the second light, a telecentric system, or a module for changing the focus region of the first light or the second light. In embodiments, the end of the optical system from which the light is irradiated may be positioned on the opposite side of the receptacle 102 relatively to the side where the light generation part is located.

In some embodiments more than one first lighting device 103 may be integrated, for example two may be integrated. In this case the two first lighting devices 103 may be located on opposite sides of the receptacle 102.

In some embodiments the two first lighting devices 103 share the same light generator and have dedicated optical system to transport the light to irradiation point. In embodiments the end, from which the light irradiated, of the optical system of one the two first lighting devices 103 and the end, from which the light irradiated, of the optical system of the other of the two first lighting devices 103 are located on opposite sides of the receptacle 102.

In some embodiments more than one second lighting device 104 may be integrated, for example two may be integrated.

In some embodiments the two second lighting devices 103 share the same light generator and have dedicated optical system to transport the light to irradiation point. In embodiments the end, from which the light irradiated, of the optical system of one the two second lighting devices 104 and the end, from which the light irradiated, of the optical system of the other of the two second lighting devices 104 are located on opposite sides of the receptacle 102.

For a given part of the optically reactive material, the irradiation of the first light may be realized by having a light immobile, or by having a light that is moving along the given part of the optically reactive material. Similarly, the irradiation of the second light may be realized by having a light immobile, or by having a light that is moving along the part of the optically reactive material.

The manufacturing device 101 may be configured to irradiate, by the first light and the second light, successively different parts of the optically reactive material. This allows the realization of the object layer by layer. These successive irradiations may be done by moving the first lighting device 103 and/or the second lighting device 104 relatively to the receptacle 102. To do this the receptacle 102 may be immobile and the first lighting device 103 and the second lighting device 104 may move, or the first lighting device 103 and the second lighting device 104 may be immobile and the receptacle 102 may move. When the lighting devices comprise the light generator and the optical system, the movement of the lighting device may correspond to the movement of the end of the optical system from which the light is irradiated. In other words, this may be done by using the telecentric system, or by changing the focus region of the first lighting device 103 and/or the second lighting device 104.

The movement of the different lighting devices may be independent. The movement of the two first lighting devices 103 may be in opposite directions. The movement of the two second lighting devices 104 may be in opposite directions.

This movement may be a continuous one during which the first lighting device 103 and the second lighting device 104 are kept turned on between the irradiation of two different parts of the optically reactive material. The speed of displacement of the first light and the second light may depend on the relaxation time of the optically reactive material. Keeping the light turned on may prevent the creation of an interface between the different layers.

The movement may otherwise be a discontinuous one. Between the irradiation of each part of the optically reactive material, the first lighting device 103 and the second lighting device 104 are turned off. The time between the irradiation of two layers may depend on the relaxation time of the optically reactive material.

The receptacle 102 advantageously have parts of sides or parts of the bottom or the top that are transparent to the first wavelength and/or the second wavelength. It is especially advantageous to place these transparent parts in the vicinity of the first lighting device 103 and the second lighting device 104 to allow the light outing of these lighting devices to reach the optically reactive material.

These transparent parts may be flat and have a refractive index identical to the one of the optically reactive material. These allow the limitation of refraction, by the transparent parts, of the light irradiated, by the lighting devices, toward the optically reactive material. This is particularly advantageous when the light impinges the sides, the bottom or the top of the receptacle 102 with a non-normal angle.

In embodiments the manufacturing device 101 may be configured to allow the encapsulation of a component in the object.

The object may be an optical element, for example a corrective optical element as an ophthalmic lens. The corrective optical element may comprise microstructures used for myopia control.

The component may be an electronic component for example an electrochromic element or an electrochromic cell. When the component is an electronic component, it is advantageous to have terminals or connectors of the electronic component to be let outside the cured region to allow an easy coupling of these terminals with another electronic component.

The component may be a film possibly an UV cut film or a polar film.

Generally, UV-cut film is configured to "cut" (absorbed and not transmitted) light in the range 398nm to 410nm, preferably 400nm. The UV-cut film may comprise UV-absorber, or BCT nanoparticles. The manufacturing device 101 and the manufacturing method allow a fine placing of the film and avoid quality issues in the final object.

The component may also comprise microstructures such as microstructures used for myopia control. The manufacturing device 101 and the manufacturing method presented below allow the encapsulation of components having microstructures in the object without deforming the optical function of the microstructures.

The component may be a microstructured film. The film may comprised several microstructures placed according to a specific design to achieve a specific optical function.

The component may have diffusive elements on the whole or on part of the component. These diffusive elements may be created using different techniques such as laser marking or material deposition. Such component with diffusive elements may be a film in which diffusive particles are embedded, or by having a diffusive microstrutured surface, or any other means.

The manufacturing device 101 of this divulgation may allow the integration of components that block or disturb one or more of the lights used to cure the optically reactive material (the light sheet and the projected image).

After the manufacturing step, the component may be at the surface of the object, or the component may be inside the object, sandwiched between two parts of the object.

The manufacturing device 101 may also comprise a control module. The control module may be configured to control the position of the light devices and values of the parameters of the light irradiated by the light devices.

The control module may comprise a memory and a processor.

The control module 102 may be a low resource control module.

Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field-programmable gate arrays (FPGAs), programmable logic devices (PLDs), state machines, gated logic, discrete hardware circuits, and other suitable hardware configured to perform the various functionality described throughout this disclosure.

The memory is computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor of the control module.

### Description of the method for manufacturing the object encapsulating the component.

To realize the manufacturing of the object encapsulating the component, the memory of the control module may store a computer program comprising instructions which, when the program is executed by the processor of the control module, cause the control module to carry out a method, for example a computer implemented method, for manufacturing the object. This manufacturing of the object may be realized by controlling positions of the lighting devices and the values of the parameters of the light irradiated by the lighting devices.

The method, as presented in figure 2, comprises:
- a step 201 of placing the component in a volume of the optically reactive material,
- a step 202 of irradiating, for forming a part of the object, a part of the optically reactive material, the part of the optically reactive material being adjacent to the component, the irradiating being realized with a first light of a first wavelength and a second light of a second wavelength.
The step 202 of irradiating the part of the optically reactive material depends on a value of at least one characteristic of the component.

The characteristic of the component may be a refractive index of the component or a mean distance between a first side of the component and a second side of the component.

The irradiation of the first light may be realized by the first lighting device 103 and the irradiation of the second light may be realized by the second lighting device 104.

The step 201 of placing the component may be realized manually, for example by an operator of the manufacturing device 101. The step 201 of placing the component may be realized automatically by the manufacturing device 101, for example using a robotic arm of the manufacturing device 101.

The method may depend on whether the component is intended to be at the surface of the manufactured object or inside the object.

When the component is intended to be at the surface of the object, it is advantageous to tilt the component in such a way that the first light and the second light intersect the component only once.

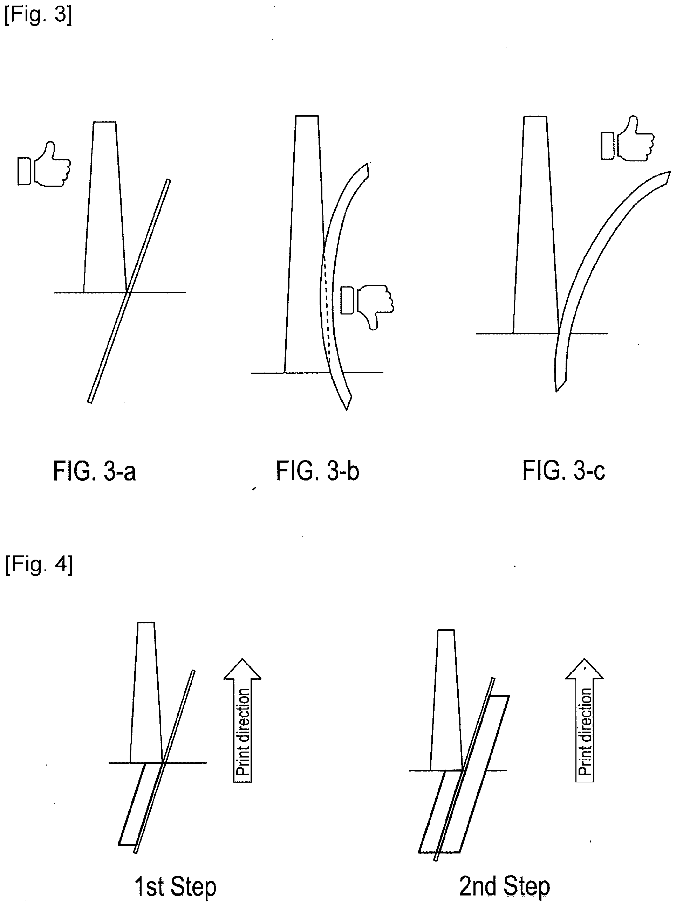

Situations of figures 3-a and 3-c may be used when the component is at the surface of the object.

When the component is inside the object, there are 2 possibilities. Either the component is opaque, at least partially, to one or more of the light or the component is transparent to one or more of the lights (but can still disturb the light by deviating it).

In an embodiment where the component is opaque to the light, one may tilt the component (depending on its shape) in such a way that each side of the component is successively accessed by the first light and the second light. (i.e. either by the front side the back side, top side or the bottom side of the receptacle 102).

In embodiments when the component is optically opaque to the first wavelength, the method may comprise, successively realizing, until the whole object is manufactured:
- the step 201 of placing the component so that each point of a first side of the component faces the first lighting device 103,
- the step 202 of irradiating, using the first lighting device 103, for forming the first part of the object, the first part of the optically reactive material, the first part of the optically reactive material being adjacent to the first side of the component,
- a further step 201 of placing the component but this time so that each point of a second side of the component faces the first lighting device 103,
- a further step 202 of irradiating, using the first lighting device 103, but this time for forming a second part of the object, a second part of the optically reactive material, the second part of the optically reactive material being adjacent to the second side of the component.

In these embodiments, and as previously described, the irradiation of the first light by the first lighting device 103 may be realized almost simultaneously to the irradiation of the second light by the second lighting device 104.

The first side of the component and the second side of the component may be opposite sides of the component.

By each point of a side of the component faces the first lighting device, one means that from each point of the side a straight line may be draw toward the lighting device without being blocked by anything opaque to the first wavelength.

The figures 3-a and 3-c represents a situation in which each point of a side of the component faces the lighting device. The figure 3-b represents a situation in which this criterion is not reach.

In this embodiment either the object or the first lighting device 103 is displaced between the irradiation of the first part of the optically reactive material and the irradiation of the second part of the optically reactive material.

Figure 4 represents the embodiment presented above in which one manufactures the object while encapsulating a component opaque to one of the lights.

In embodiments when the component is flat, for example when the component is a film, one may place it orthogonally with respect the direction of irradiation of the first light and the direction of irradiation of the second light, advantageously with the light forming an image or a light sheet. Thanks to this positioning, the influence of the component on the propagation of the image or the light sheet is minor. To form the device on both sides of the component it would be advantageous to make the image or the light sheet coming from both sides.

In embodiments where the component is not perfectly flat, in particular when the component is curved or pseudospherical, it would be advantageous to put a small tilt on the component with respect to the direction of irradiation of the first light and the direction of irradiation of the second light. Thanks to this positioning, the error during the curing of the material, in contact with the component, is reduced. A small tilt refers to a condition in which the normal to the surface of the component forms an angle with the direction of irradiation of the first or second light, such that the angle is close to, but not exactly, orthogonal or parallel. These errors may be created by blind spots along the surface of the component when the component is not perfectly flat and placed orthogonal to the axis of irradiation of the lights.

In embodiments when the component is optically opaque to the first wavelength, and the manufacturing device 101 comprises two first lighting devices 103 configured to irradiate the first light, the method may comprise, successively realizing, until the whole object is manufactured:
- The step 201 of placing the component so that each point of a first side of the component faces one of the two first lighting devices 103, and so that each point of a second side of the component faces another of the two first lighting devices 103,
- The step 202 of irradiating, using the one of the two first lighting devices 103, for forming the first part of the object, the first part of the optically reactive material, the first part of the optically reactive material being adjacent to the first side of the component.
- A further step 202 of irradiating, using the another of the two first lighting devices 103, for forming a second part of the object, a second part of the optically reactive material, the second part of the optically reactive material being adjacent to the second side of the component.

In embodiments, the irradiation of the first part of the optically reactive material and the irradiation of the second part of the optically reactive material may be realized almost simultaneously.

Simultaneously to the irradiation of the first part of the optically reactive material by the first light, the first part of the optically reactive material may be irradiated by the second light.

Simultaneously to the irradiation of the second part of the optically reactive material by the first light, the second part of the optically reactive material may be irradiated by the second light.

In embodiments when the component is optically opaque to both the first wavelength and the second wavelength, the manufacturing device 101 may comprise two first lighting devices 103 and two second lighting devices 104, the method may comprise:
- when placing the component so that each point of the first side of the component faces one of the two first lighting devices 103, to also place the component so that each point of the first side of the component faces also one of the two second lighting devices 104, and
- and when placing the component so that each point of the second side of the component faces another of the two first lighting devices 103, to also place the component so that each point of the of the second side of the component faces also another of the two second lighting devices 104.
Furthermore:
- when irradiating, using the one of the two first lighting devices 103, the first part of the optically reactive material, the manufacturing device 101 may also irradiate, using the one of the two second lighting devices 104, the first part of the optically reactive material,
- when irradiating, using the another of the two first lighting devices 103, the second part of the optically reactive material, the manufacturing device 101 may also irradiate, using the another of the two second lighting devices 104 the second part of the optically reactive material.

Accordingly, the placing of the component takes care that each point of the part of the optically reactive material may be lighted by either of the first lighting devices and by either of the second lighting devices and that the placing doesn't lead to part of optically reactive material to be in the shadow of the component for both first light and second light.

In embodiments when the first lighting device 103 and/or the second lighting device 104 is doubled, the doubled first lighting device 103 and/or the doubled second lighting device 104 may be configured to irradiate simultaneously the first part of the optically reactive material and the second part of the optically reactive material.

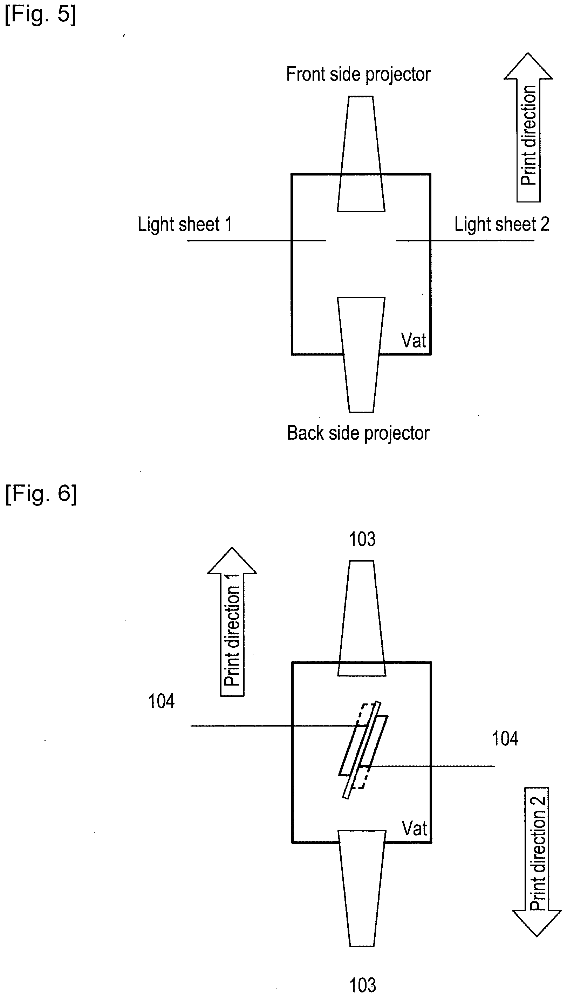

Figure 5 represents the embodiment of the manufacturing device 101 in which two first lighting devices 103 and two second lighting devices 104 are used. One manufactures both sides of the object with two couple of lighting devices (103 and 104).

The figure 6 represents an embodiment derived from the one of the figure 5. On this embodiment the two first lighting devices 103 are configured to move in opposite directions. This allows a quicker manufacturing of the object.

In embodiments, when the component is optically transparent to the first wavelength or the second wavelength, the method may comprise the step of irradiating, using the first lighting device 103 or the second lighting device 104, simultaneously the first part of the optically reactive material and the second part of the optically reactive material.

In these embodiments, the method may comprise a step of determining, for the light of the wavelength to which the component is transparent, values of parameters of the light based on a refractive index of the component and possibly a mean distance between the first side of the component and the second side of the component. Such parameters being related to light absorption and/or deviation while passing through the component and therefore to deformations of the light while passing throw the component.

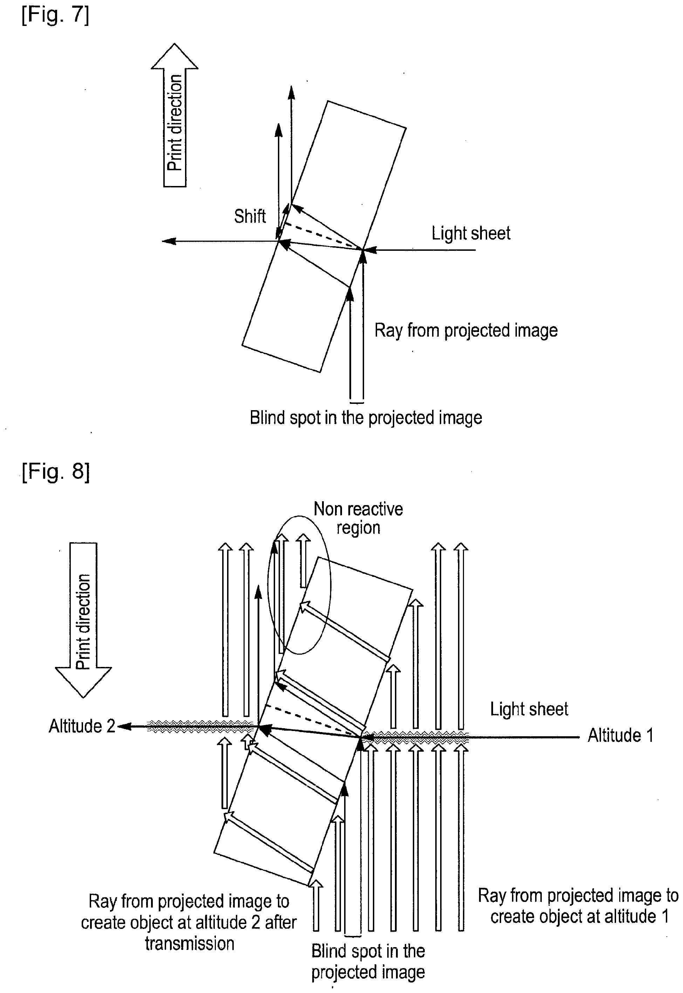

Figure 7 represents the refraction of the light caused by the component, when the component is transparent to the light. Typically, the component may deform the shape of the light and modify the trajectory of the light. When the light is a light sheet the shape of the light sheet may be transformed from a flat sheet to a complex shape. Generally, the modification of the trajectory of the light may generate a shift of the image or the light sheet.

In some embodiments, when the light with a wavelength for which the component is transparent is an image, a first part of the image may be dedicated to the irradiation of the first part of the optically reactive material and a second part of the image may be dedicated to the irradiation of the second part of the optically reactive material.

The figure 8 represents a way of taking into account the component to adapt the image irradiating the optically reactive material. Typically, to take into account the size of the component, the irradiated image may include a blind spot placed at the corresponding surface of the component in the image. It may also take into account the shift of the deformation of the irradiated image, caused by the refraction of the component, to adapt the irradiated image. To do this adaptation, the irradiated image may then be divided in 2 parts. A first part corresponds to the region directly reached by the lighting device and a second part corresponds to the region behind the component and not in direct view of the lighting device. This second part of the image may then be adapted to mitigate the deformation and shifting of the irradiated image when passing through the component. Thanks to this adaptation the image imping the second part of the material, will be the intended image to correctly cure the optically reactive material.

In embodiments the component may be a liquid component. The liquid component may be deposited by a syringe inside the optically reactive material. To realize this deposition, it is advantageous to have the two following conditions:
- the liquid component may be non-miscible or its diffusion into the optically reactive material may be slow enough to keep a good print definition compared to the print time, and its density is sensibly the same as the one of the curable composition.
- the liquid component can be curable, during printing or after printing. It could be considered to cure this additional phase in a post-curing with different wavelength or different activation such as thermal curing.

## Claims

1. A manufacturing device (101) for additively manufacturing an object, the object encapsulating a component, the manufacturing device (101) being configured for:
• placing the component in a volume of an optically reactive material,
• irradiating, for forming a part of the object, a part of the optically reactive material, the part of the optically reactive material being adjacent to the component, the irradiating being realized with a first light of a first wavelength and a second light of a second wavelength,
• wherein the irradiation of the part of the optically reactive material depends on a value of at least one characteristic of the component.

2. The manufacturing device (101) according to the claim 1,
the component being optically opaque to the first wavelength,
the manufacturing device (101) comprising a lighting device (103) configured to irradiate the first light,
the part of the object being a first part of the object,
the part of the optically reactive material being a first part of the optically reactive material,
the manufacturing device (101) being configured for successively realizing, until the whole object is manufactured:
placing the component so that each point of a first side of the component faces the lighting device (103),
irradiating, using the lighting device (103), for forming the first part of the object, the first part of the optically reactive material, the first part of the optically reactive material being adjacent to the first side of the component,
placing the component so that each point of a second side of the component faces the lighting device (103),
irradiating, using the lighting device (103), for forming a second part of the object, a second part of the optically reactive material, the second part of the optically reactive material being adjacent to the second side of the component.

3. The manufacturing device (101) according to the claim 1,
the component being optically opaque to the first wavelength,
the manufacturing device (101) comprising two lighting devices (103) configured to irradiate the first light,
the part of the object being a first part of the object,
the part of the optically reactive material being a first part of the optically reactive material,
the manufacturing device (101) being configured for successively realizing, until the whole object is manufactured:
• placing the component so that each point of a first side of the component faces one of the two lighting devices (103), and so that each point of a second side of the component faces another of the two lighting devices (103),
• irradiating, using the one of the two lighting devices (103), for forming the first part of the object, the first part of the optically reactive material, the first part of the optically reactive material being adjacent to the first side of the component,
• irradiating, using the another of the two lighting devices (103), for forming a second part of the object, a second part of the optically reactive material, the second part of the optically reactive material being adjacent to the second side of the component,
the irradiation of the first part of the optically reactive material and the irradiation of the second part of the optically reactive material being realized simultaneously.

4. The manufacturing device (101) according to the claim 3,
a direction of a movement of the one of the two lighting devices (103) being opposite to a direction of a movement of the another of the two lighting devices (103).

5. The manufacturing device (101) according to the claim 3 or 4,
the component being optically opaque to the second wavelength,
the manufacturing device (101) comprising two further lighting devices (104) configured to irradiate the second light,
the manufacturing device being configured to:
• when placing the component so that each point of the first side of the component faces the one of the two lighting devices (103), to also place the component so that each point of the first side of the component faces also one of the two further lighting devices (104), and
• when placing the component so that each point of the second side of the component faces the another of the two lighting devices (103), to also place the component so that each point of the of the second side of the component faces also another of the two further lighting devices (104).

6. The manufacturing device (101) according to the claim 5,
a direction of a movement of the one of the two further lighting devices (104) being opposite to a direction of a movement of the another of the two further lighting devices (104).

7. The manufacturing device (101) according to anyone of the claims 2 to 4,
the component being optically transparent to the second wavelength,
the manufacturing device (101) comprising a further lighting device (104), the further lighting device (104) being configured to irradiate the second light,
the manufacturing device (101) and the further lighting (104) device being configured for:
irradiating, using the further lighting device, simultaneously the first part of the optically reactive material and the second part of the optically reactive material with the second light.

8. The manufacturing device (101) according to the claim 7,
the manufacturing device (101) being configured to determine values of parameters of the second light based on a refractive index of the component and possibly a mean distance between the first side of the component and the second side of the component.

9. The manufacturing device (101) according to the claim 7 or 8,
the second light being an image,
a first part of the image being dedicated to the irradiation of the first part of the optically reactive material and a second part of the image being dedicated to the irradiation of the second part of the optically reactive material.

10. The manufacturing device (101) of any of the claims 2 to 9,
the first side of the component and the second side of the component being opposite sides of the component.

11. The manufacturing device (101) of anyone of the claims 1 to 10,
the first light being irradiated along a first axis or a first plane,
the second light being irradiated along a second axis or a second plane,
the first axis or the first plane being sensibly perpendicular to the second axis or the second plane.

12. The manufacturing device (101) of anyone of the claims 1 to 11,
the manufacturing device (101) being also configured for forming successive layers of the part of the object and to wait during a predetermined time after the formation of each layer,
the predetermined time depending on a relaxation time of the optically reactive material.

13. The manufacturing device (101) of anyone of the claims 1 to 11,
the manufacturing device (101) being also configured for forming layers of the part of the object at a speed depending on a relaxation time of the optically reactive material.

14. The manufacturing device (101) of anyone of the claims 1 to 13,
the object being an optical object, possibly a corrective optical object and/or the component being an electronic component or a film possibly an UV cut film.

15. A manufacturing method of an object encapsulating a component, the manufacturing method comprising:
• placing (201) the component in a volume of the optically reactive material,
• irradiating (202), for forming a part of the object, a part of the optically reactive material, the part of the optically reactive material being adjacent to the component, the irradiating being realized with a first light of a first wavelength and a second light of a second wavelength,
the irradiation (202) of the part of the optically reactive material depends on a value of at least one characteristic of the component.
